# FASCICULE DE BREVET EUROPEEN

(11) **EP 3 271 236 B1**
(45) Date de publication et mention de la délivrance du brevet: **01.05.2019**
(21) Numéro de dépôt: 16714998.8
(22) Date de dépôt: 03.03.2016
(51) Int. Cl.: B62D 15/02, B60K 35/00

(54) **PROCÉDÉ ET DISPOSITIF DE CONTRÔLE DE CHANGEMENT DE VOIE AUTOMATISÉ D'UN VÉHICULE AUTOMATISÉ, PAR SÉLECTION DE LA VOIE ET VALIDATION**
VERFAHREN UND VORRICHTUNG ZUR STEUERUNG DES AUTOMATISCHEN SPURWECHSELS EINES AUTOMATISIERTEN FAHRZEUGS DURCH AUSWAHL DER FAHRSPUR UND VALIDIERUNG
METHOD AND DEVICE FOR CONTROLLING THE AUTOMATED LANE CHANGE OF AN AUTOMATED VEHICLE, BY SELECTION OF THE LANE AND VALIDATION

(30) Priorité: 18.03.2015 FR 1552236
(43) Date de publication de la demande: 24.01.2018
(73) Titulaire: PSA AUTOMOBILES S.A., 78300 Poissy (FR)
(72) Inventeur: FERON, Stephane, 92350 Le Plessis Robinson (FR); TACCORI DUVERGEY, Celine, 92120 Montrouge (FR); LAINE, Vincent, 78340 Les Clayes Sous Bois (FR)
(74) Mandataire: Jeannin, Laurent Jean-Pierre
(86) Numéro de dépôt international: PCT/FR2016/050486
(87) Numéro de publication internationale: WO 2016/146916

(56) Documents cités:
- EP-A1- 1 867 542
- DE-A1-102010 022 620
- DE-A1-102011 011 120
- US-A1- 2005 155 808
- US-A1- 2012 109 462
- US-A1- 2013 184 926

## Description

L'invention concerne les véhicules automatisés, éventuellement de type automobile, et plus précisément les dispositifs et procédés qui permettent de contrôler les changements de voie de circulation automatisés de tels véhicules.

Il a été récemment proposé d'équiper certains véhicules d'un dispositif de contrôle permettant de les conduire de façon automatisée en fonction d'instructions fournies par leur conducteur, mais sans que ce dernier n'agisse sur les organes de commandes opérationnels comme les pédales ou le volant. Ce type de dispositif de contrôle est donc capable de contrôler le fonctionnement du groupe motopropulseur (ou GMP), la direction assistée et le système de freinage de son véhicule en fonction d'informations relatives notamment à l'environnement de ce dernier (comme par exemple les courbure et pente de la portion de voie de circulation empruntée, les panneaux et lignes de cette portion, et la vitesse relative de chaque véhicule détecté). Ce contrôle se fait au moyen de commandes qui sont fournies à des actionneurs choisis du véhicule. Le document US 2013/184926 A1 est considéré comme l'art antérieur le plus proche selon le préambule des revendications 1 et 6.

L'invention concerne les manoeuvres qui sont destinées à réaliser de façon automatisée un changement de voie décidé par le conducteur d'un véhicule. Actuellement, pour qu'une telle manoeuvre de changement de voie automatisé soit déclenchée, il suffit que le conducteur du véhicule active la fonction de changement de voie automatisé par actionnement d'une unique commande désignant le côté du dépassement. Par exemple, cette sélection peut se faire en actionnant l'indicateur de changement de direction qui est associé au côté de changement de voie sélectionné lorsque le véhicule est dans un mode de conduite automatisée.

Ce mode de fonctionnement présente au moins trois inconvénients potentiellement dangereux. En effet, les usagers de la route qui sont situés dans l'environnement du véhicule dans lequel le conducteur vient de demander un changement de voie ne sont prévenus de la manoeuvre qu'au moment où l'indicateur de changement de direction est activé et donc lorsque cette manoeuvre débute. Par ailleurs, la manoeuvre de changement de voie étant déclenchée par l'actionnement d'une unique commande, la probabilité d'une erreur de manipulation volontaire ou involontaire, n'est pas négligeable. D'autre part, la décision de changement de voie peut avoir été prise par le conducteur en présence de conditions climatiques difficiles (brouillard, neige, averse) et/ou d'autres véhicules gênant la visibilité, et le conducteur ne peut pas facilement annuler la manoeuvre avant qu'elle ne débute.

L'invention a donc notamment pour but d'améliorer la situation.

Elle propose notamment à cet effet un procédé, destiné à contrôler la réalisation d'une manoeuvre de changement de voie automatisée d'un véhicule automatisé, et comprenant :
- une première étape dans laquelle un conducteur du véhicule sélectionne un côté vers lequel il veut changer de voie, puis le véhicule active un indicateur de changement de direction associé au côté sélectionné, puis détermine, par analyse de données acquises dans son environnement, si ce dépassement est réalisable, et signale au conducteur le résultat de cette détermination, et
- une seconde étape dans laquelle, en cas de validation du changement de voie par le conducteur, le véhicule commande des actionneurs choisis qu'il comprend pour qu'ils induisent une manoeuvre destinée à réaliser le changement de voie validé.

On peut ainsi déclencher une manoeuvre automatisée de changement de voie de circulation (et donc de dépassement) en toute sécurité tout en évitant les erreurs de manipulation du conducteur.

Le procédé selon l'invention peut comporter d'autres caractéristiques qui peuvent être prises séparément ou en combinaison, et notamment :
- dans la seconde étape le véhicule peut désactiver l'indicateur de changement de direction une fois qu'il est parvenu sur une voie de circulation de destination ;
- dans la seconde étape le véhicule peut interdire la manoeuvre de changement de voie en cas de validation de la manoeuvre par le conducteur consécutivement au signalement d'une impossibilité de changement de voie ;
- dans la première étape le véhicule peut signaler au conducteur le résultat de sa détermination au moyen d'un message textuel et/ou d'un message sonore ;
- dans la première étape les données acquises peuvent être issues de moyens d'acquisition du véhicule.

L'invention propose également un dispositif de contrôle, destiné à contrôler la réalisation d'une manoeuvre de changement de voie automatisée d'un véhicule automatisé, et comprenant des moyens de contrôle agencés, en cas de sélection par un conducteur du véhicule d'un côté vers lequel il veut changer de voie :
- pour déclencher une activation d'un indicateur de changement de direction associé au côté sélectionné, puis
- pour déclencher un signalement au conducteur d'un résultat d'une détermination d'une possibilité de réalisation du changement de voie par analyse de données acquises dans un environnement du véhicule, puis
- en cas de validation du changement de voie par le conducteur, pour fournir des commandes à des actionneurs choisis du véhicule pour qu'ils induisent une manoeuvre destinée à réaliser le changement de voie validé.

Par exemple, les moyens de contrôle peuvent être agencés pour déclencher une désactivation de l'indicateur de changement de direction une fois que le véhicule est parvenu sur une voie de circulation de destination.

Egalement par exemple, les moyens de contrôle peuvent être agencés pour interdire la manoeuvre de changement de voie en cas de validation du changement de voie par le conducteur consécutivement au signalement d'une impossibilité de changement de voie.

L'invention propose également un véhicule automatisé, éventuellement de type automobile, et comprenant un dispositif de contrôle du type de celui présenté ci-avant.

D'autres caractéristiques et avantages de l'invention apparaîtront à l'examen de la description détaillée ci-après, et des dessins annexés, sur lesquels:
- la figure 1 illustre schématiquement et fonctionnellement un exemple de véhicule automatisé équipé d'un dispositif de contrôle selon l'invention, et
- la figure 2 illustre schématiquement un exemple d'algorithme mettant en oeuvre un procédé de contrôle selon l'invention.

L'invention a notamment pour but de proposer un procédé de contrôle, et un dispositif de contrôle DC associé, destinés à contrôler la réalisation d'une manoeuvre de changement de voie automatisée d'un véhicule V automatisé et circulant sur une première voie de circulation.

Dans ce qui suit, on considère, à titre d'exemple non limitatif, que le véhicule V automatisé est de type automobile. Il s'agit par exemple d'une voiture. Mais l'invention n'est pas limitée à ce type de véhicule. Elle concerne en effet tout type de véhicule terrestre pouvant effectuer des déplacements et des manoeuvres sur le sol et pouvant être conduit de façon automatisée en fonction d'instructions fournies par le conducteur. Ainsi, elle concerne également les véhicules utilitaires, les engins de voirie, les autocars et les camions, par exemple.

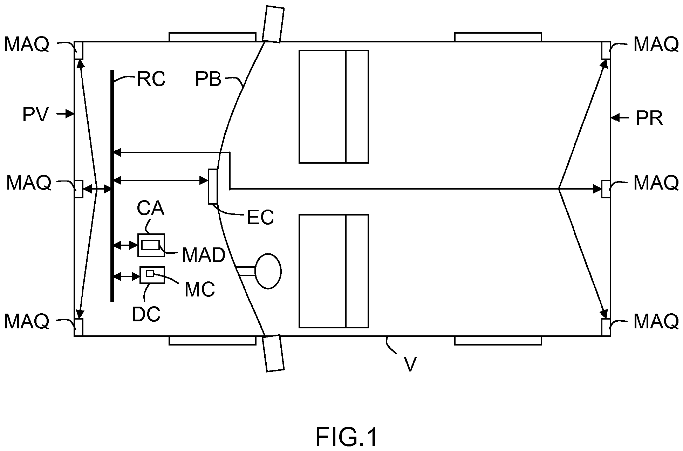

On a schématiquement représenté sur la figure 1 un exemple de véhicule V dans lequel peut être mis en oeuvre un procédé de contrôle de la réalisation d'une manoeuvre de changement de voie automatisée, selon l'invention.

Il est important de noter que le véhicule V comprend un groupe motopropulseur (ou GMP), un dispositif de contrôle DC, une direction assistée et un système de freinage qui peuvent être contrôlés au moyen d'actionneurs en fonction d'informations relatives, notamment, à son environnement. Ces informations sont définies par des données acquises qui peuvent être issues de moyens d'acquisition MAQ du véhicule V.

Ces moyens d'acquisition MAQ peuvent, par exemple, comprendre des caméras numériques et/ou des radars et/ou des lasers scanners et/ou des lidars. Par exemple et comme illustré non limitativement sur la figure 1, des moyens d'acquisition MAQ peuvent être implantés dans le bouclier ou pare-chocs avant, qui est installé dans la partie avant PV du véhicule V, ou bien dans une partie haute du pare-brise, et/ou dans le bouclier ou pare-chocs arrière. Ces moyens d'acquisition d'images MAQ peuvent, par exemple et comme illustré non limitativement sur la figure 1, communiquer à des moyens d'analyse MAD les données numériques acquises dans leur zone d'observation via un réseau de communication RC embarqué dans le véhicule V. Ce réseau de communication RC est éventuellement de type multiplexé, et agencé de manière à permettre à des équipements électroniques, embarqués dans le véhicule V et connectés à lui, d'échanger des informations et instructions.

Les moyens d'analyse MAD peuvent, par exemple, être chargés d'analyser les données numériques acquises par certains des moyens d'acquisition MAQ, afin, d'une part, de détecter la présence d'autres véhicules ou d'obstacles, et les lignes qui délimitent la voie de circulation empruntée par leur véhicule V, et, d'autre part, de déterminer la position et/ou la vitesse relative des autres véhicules.

Par ailleurs, les moyens d'analyse MAD peuvent, comme illustré non limitativement sur la figure 1, être implantés dans un calculateur CA qui est éventuellement connecté au réseau de communication embarqué RC. Mais ce n'est pas obligatoire. En effet, ils pourraient faire partie de l'équipement électronique embarqué comportant le dispositif de contrôle DC (ou constituant ce dernier (DC)), ou bien constituer eux-mêmes un équipement électronique embarqué. Par conséquent, les moyens d'analyse MAD peuvent être réalisés sous la forme de modules logiciels ou bien d'une combinaison de circuits électroniques et de modules logiciels.

On notera que les moyens d'acquisition MAQ et/ou les moyens d'analyse MAD peuvent éventuellement faire partie du dispositif de contrôle DC. Mais ce n'est pas obligatoire. En effet, ils pourraient faire partie d'un dispositif d'observation embarqué dans le véhicule V et assurant au moins une autre fonction au sein de ce dernier (V), comme par exemple la détection de personnes ou d'objets dans l'environnement du véhicule V ou la détection de véhicules en amont et en aval du véhicule V pour un système de régulation de vitesse et/ou la détection de lignes pour un système de recentrage dans la voie de circulation.

Le procédé (d'aide), selon l'invention, comprend des première et seconde étapes qui peuvent être mises en oeuvre par un dispositif de contrôle DC implanté dans le véhicule V. Cette mise en oeuvre nécessite que le conducteur ait préalablement sélectionné un mode de conduite automatisée offert par son véhicule V. Cette sélection de mode peut se faire par tout moyen connu de l'homme de l'art, et notamment par actionnement d'un organe de commande ou par une commande vocale dédiée. Cet organe de commande peut être dédié ou non. Il peut être de type sensitif ou mécanique ou encore électromécanique, par exemple. Ainsi, il peut, par exemple, faire partie d'une manette (ou d'un commodo) ou être implanté dans une partie centrale du volant.

Comme illustré non limitativement sur la figure 1, un dispositif de contrôle DC, selon l'invention, comprend au moins des moyens de contrôle MC. Ce dispositif de contrôle DC peut, comme illustré et comme évoqué précédemment, constituer un équipement électronique embarqué. Mais cela n'est pas obligatoire. En effet, il pourrait, par exemple, être implanté dans un calculateur embarqué et assurant éventuellement au moins une autre fonction au sein de son véhicule V. Par conséquent, le dispositif de contrôle DC (et en particulier ses moyens de contrôle MC) peu(ven)t être réalisé(s) sous la forme de modules logiciels (ou informatiques ou encore « software »), ou bien d'une combinaison de circuits électroniques (ou « hardware ») et de modules logiciels.

On notera que dans l'exemple illustré non limitativement sur la figure 1, le dispositif de contrôle DC est connecté au réseau de communication embarqué RC. Mais cela n'est pas obligatoire.

On notera également que les moyens d'analyse MAD pourraient faire partie du dispositif de contrôle DC.

Une première étape du procédé, selon l'invention, débute lorsque le conducteur du véhicule V sélectionne un côté vers lequel il veut changer de voie. Les moyens de contrôle MC du dispositif de contrôle DC sont informés de la sélection de ce côté.

Ce côté sélectionné désigne une seconde voie de circulation (dite de destination) qui est située à gauche ou à droite de la première voie de circulation sur laquelle circule initialement le véhicule V.

On notera que ce côté peut être sélectionné par tout moyen connu de l'homme de l'art, et notamment par actionnement d'un organe de commande ou par une commande vocale dédiée. Cet organe de commande peut être dédié ou non. Il peut être de type sensitif ou mécanique ou encore électromécanique, par exemple. Ainsi, il peut, par exemple, faire partie d'une manette (ou d'un commodo), comme par exemple celle (celui) qui sert à activer l'indicateur de changement de direction (ou clignotants) ou être implanté dans une partie centrale du volant.

La première étape se poursuit par l'activation par le véhicule V d'un indicateur de changement de direction (ou clignotants) qui est associé au côté sélectionné par le conducteur. Ce sont les moyens de contrôle MC du dispositif de contrôle DC qui déclenchent cette activation qui est avantageusement destinée à avertir les usagers de la route, qui sont situés dans l'environnement du véhicule V, que ce dernier (V) est sur le point de débuter une manoeuvre de dépassement, mais, ici, avant que cette dernière ait été autorisée.

Puis, toujours dans cette première étape, le véhicule V détermine, par analyse de données acquises dans son environnement, si le changement de voie demandé par le conducteur est réalisable. Ce sont les moyens de contrôle MC du dispositif de contrôle DC qui réalisent cette détermination en fonction de données acquises, issues du véhicule V.

Toute technique de détermination de la possibilité de changer de voie, éventuellement dans le cadre d'un dépassement, peut être utilisée par les moyens de contrôle MC, et notamment une détermination par voie d'ondes et/ou par caméra(s) et/ou par radar(s) de la vitesse (éventuellement relative) du premier véhicule. On comprendra que cette détermination se base notamment sur des données acquises par les moyens d'acquisition MAQ. Par exemple, si la seconde voie adjacente existe, s'il n'y a pas un autre véhicule dans un angle mort, s'il n'y a pas de véhicule circulant à contre-sens sur la seconde voie adjacente, alors il y a une possibilité de changement de voie.

Enfin, toujours dans cette première étape, le véhicule V signale au conducteur le résultat de la détermination de possibilité de changement de voie par analyse de données acquises dans son environnement. Ce sont les moyens de contrôle MC du dispositif de contrôle DC qui déclenchent ce signalement du résultat de la détermination au conducteur.

On notera que ce signalement au conducteur peut se faire au moyen d'un message textuel et/ou d'un message sonore, par exemple du type « dépassement possible » ou « dépassement impossible ». Un message de type textuel peut être affiché sur un écran d'affichage EC du véhicule V, comme par exemple celui du combiné central (implanté en position centrale dans la planche de bord PB) ou le combiné d'instrumentation du tableau de bord, ou sur une partie du pare-brise qui constitue alors un écran pour un dispositif d'affichage tête haute. Un message de type sonore peut être diffusé par au moins un haut-parleur du véhicule V.

Dans une seconde étape du procédé, selon l'invention, en cas de validation du changement de voie par le conducteur, le véhicule V commande des actionneurs choisis qu'il comprend pour qu'ils induisent une manoeuvre destinée à réaliser ce changement de voie validé. Ce sont les moyens de contrôle MC du dispositif de contrôle DC qui fournissent des commandes aux actionneurs choisis.

On notera que cette validation du dépassement par le conducteur peut être effectuée par tout moyen connu de l'homme de l'art, et notamment par actionnement d'un organe de commande ou par une commande vocale dédiée. Cet organe de commande peut être dédié ou non. Il peut être de type sensitif ou mécanique ou encore électromécanique, par exemple. Ainsi, il peut, par exemple, faire partie d'une manette (ou d'un commodo), comme par exemple celle (celui) qui sert à activer l'indicateur de changement de direction (ou clignotants) ou être implanté dans une partie centrale du volant.

On notera également que le conducteur peut être éventuellement invité à valider le changement de voie pour qu'il n'oublie pas de le faire. Cette invitation peut se faire au moyen d'un message textuel et/ou d'un message sonore.

De préférence, dans la seconde étape le véhicule V désactive l'indicateur de changement de direction (ou clignotants) une fois qu'il est parvenu sur la seconde voie de circulation (de destination) qui est située à côté de la première voie de circulation. Ce sont les moyens de contrôle MC du dispositif de contrôle DC qui déclenchent cette désactivation.

Egalement de préférence, dans la seconde étape le véhicule V interdit la manoeuvre de changement de voie en cas de validation du changement de voie par le conducteur consécutivement au signalement d'une impossibilité de changement de voie. Cette option est destinée à éviter que le conducteur force le changement de voie par sa validation, alors même que le dispositif de contrôle DC lui a signalé qu'il n'était pas possible.

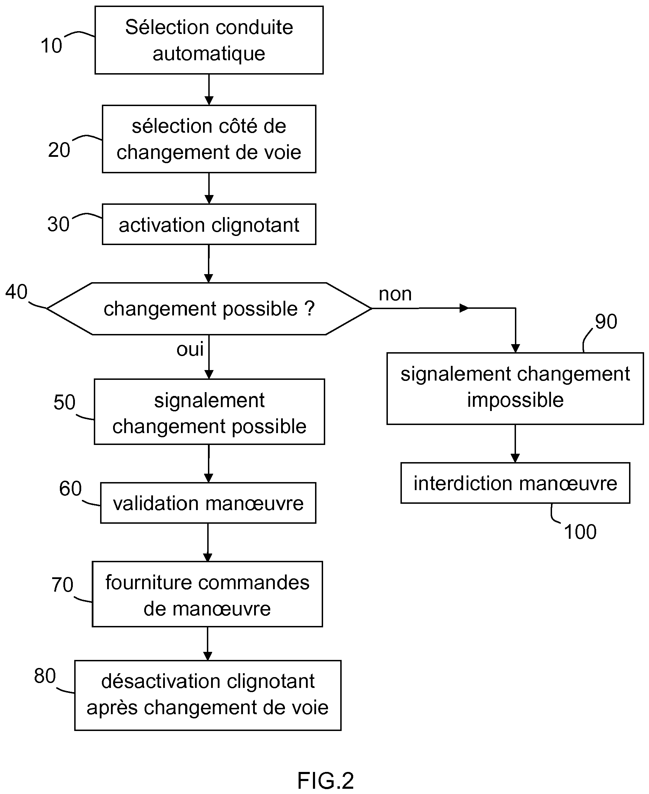

On a schématiquement illustré sur la figure 2 un exemple non limitatif d'algorithme mettant en oeuvre un procédé de contrôle selon l'invention.

Dans une sous-étape 10, le conducteur sélectionne le mode de conduite automatisée de son véhicule V, par exemple en actionnant un organe de commande ou en récitant une commande vocale dédiée.

Dans une sous-étape 20, le conducteur sélectionne le côté vers lequel il veut changer de voie.

Dans une sous-étape 30, on (le dispositif de contrôle DC) déclenche l'activation de l'indicateur de changement de direction (ou clignotants) qui est associé au côté sélectionné par le conducteur lors de la sous-étape 20.

Dans une sous-étape 40, on (le dispositif de contrôle DC) détermine, par analyse de données acquises dans l'environnement du véhicule V, si le changement de voie demandé par le conducteur est réalisable (ou possible).

Si le résultat de cette détermination est positif (« oui »), on effectue une sous-étape 50 dans laquelle on (le dispositif de contrôle DC) signale au conducteur que le changement de voie est réalisable (ou possible), par exemple au moyen d'un message textuel et/ou d'un message sonore. On notera que le conducteur peut être éventuellement invité, au moyen d'un message textuel et/ou d'un message sonore, à valider le changement de voie pour qu'il n'oublie pas de le faire.

On notera que les sous-étapes 20 à 50 font partie de la première étape du procédé de contrôle selon l'invention.

Dans une sous-étape 60, le conducteur valide le changement de voie autorisé par le dispositif de contrôle DC, par exemple par actionnement d'un organe de commande ou en récitant une commande vocale dédiée.

Dans une sous-étape 70, on (le dispositif de contrôle DC) fournit des commandes à des actionneurs choisis du véhicule V pour qu'ils induisent une manoeuvre destinée à réaliser le changement de voie validé par le conducteur lors de la sous-étape 60.

Enfin, dans une sous-étape 80, on (le dispositif de contrôle DC) déclenche la désactivation de l'indicateur de changement de direction (ou clignotants), préalablement activé lors de la sous-étape 30, une fois qu'il est averti que le véhicule V est parvenu sur la seconde voie de circulation (de destination) située à côté de la première voie de circulation (de départ).

Si le résultat du test de la sous-étape 40 est négatif (« non »), on effectue une sous-étape 90 dans laquelle on (le dispositif de contrôle DC) signale au conducteur que le changement de voie n'est pas réalisable, par exemple au moyen d'un message textuel et/ou d'un message sonore.

Puis, dans une sous-étape 100, on (le dispositif de contrôle DC) interdit la manoeuvre de changement de voie si le conducteur valide ce changement de voie, par exemple par étourderie.

On notera que les sous-étapes 60 à 100 font partie de la seconde étape du procédé de contrôle selon l'invention.

L'invention permet avantageusement de déclencher une manoeuvre automatisée de changement de voie de circulation (et donc de dépassement) en toute sécurité et en évitant les erreurs de manipulation du conducteur. En outre, elle offre une bonne ergonomie du fait des facilités d'usage et d'apprentissage de la fonction de changement de voie automatisé.

## Revendications

1. Procédé de contrôle de la réalisation d'une manoeuvre de changement de voie automatisée d'un véhicule (V) automatisé, **caractérisé en ce qu'**il comprend une première étape dans laquelle un conducteur dudit véhicule (V) sélectionne un côté vers lequel il veut changer de voie, puis ledit véhicule (V) active un indicateur de changement de direction associé audit côté sélectionné, puis détermine, par analyse de données acquises dans son environnement, si ledit changement de voie est réalisable, et signale audit conducteur le résultat de cette détermination, et une seconde étape dans laquelle, en cas de validation dudit changement de voie par ledit conducteur, ledit véhicule (V) commande des actionneurs choisis qu'il comprend pour qu'ils induisent une manoeuvre destinée à réaliser ledit changement de voie validé.

2. Procédé selon la revendication 1, **caractérisé en ce que** dans ladite seconde étape ledit véhicule (V) désactive ledit indicateur de changement de direction une fois qu'il est parvenu sur une voie de circulation de destination.

3. Procédé selon l'une des revendications 1 et 2, **caractérisé en ce que** dans ladite seconde étape ledit véhicule (V) interdit ladite manoeuvre de changement de voie en cas de validation dudit changement de voie par ledit conducteur consécutivement au signalement d'une impossibilité de changement de voie.

4. Procédé selon l'une des revendications 1 à 3, **caractérisé en ce que** dans ladite première étape ledit véhicule (V) signale audit conducteur ledit résultat de sa détermination au moyen d'un message textuel et/ou d'un message sonore.

5. Procédé selon l'une des revendications 1 à 4, **caractérisé en ce que** dans ladite première étape lesdites données acquises sont issues de moyens d'acquisition (MAQ) dudit véhicule (V).

6. Dispositif de contrôle (DC) pour réaliser une manoeuvre de changement de voie automatisée d'un véhicule (V) automatisé, **caractérisé en ce qu'**il comprend des moyens de contrôle (MC) agencés, en cas de sélection par un conducteur dudit véhicule (V) d'un côté vers lequel il veut changer de voie, pour déclencher une activation d'un indicateur de changement de direction associé audit côté sélectionné, puis pour déclencher un signalement audit conducteur d'un résultat d'une détermination d'une possibilité de réalisation dudit changement de voie par analyse de données acquises dans un environnement dudit véhicule (V), puis, en cas de validation dudit changement de voie par ledit conducteur, pour fournir des commandes à des actionneurs choisis dudit véhicule (V) pour qu'ils induisent une manoeuvre destinée à réaliser ledit changement de voie.

7. Dispositif selon la revendication 6, **caractérisé en ce que** lesdits moyens de contrôle (MC) sont agencés pour déclencher une désactivation dudit indicateur de changement de direction une fois que ledit véhicule (V) est parvenu sur une voie de circulation de destination.

8. Dispositif selon l'une des revendications 6 et 7, **caractérisé en ce que** lesdits moyens de contrôle (MC) sont agencés pour interdire ladite manoeuvre de changement de voie en cas de validation dudit changement de voie par ledit conducteur consécutivement au signalement d'une impossibilité de changement de voie.

9. Véhicule (V) automatisé, **caractérisé en ce qu'**il comprend un dispositif de contrôle (DC) selon l'une des revendications 6 à 8.

10. Véhicule selon la revendication 9, **caractérisé en ce qu'**il est de type automobile.

## Patentansprüche

1. Verfahren zur Kontrolle des Ausführens eines automatisierten Spurwechselmanövers eines automatisierten Fahrzeugs (V), **dadurch gekennzeichnet, dass** es einen ersten Schritt umfasst, bei dem ein Fahrer des Fahrzeugs (V) eine Seite wählt, zu der hin er die Spur wechseln will, anschließend das Fahrzeug (V) einen Fahrtrichtungsanzeiger aktiviert, der der gewählten Seite zugeordnet ist, anschließend durch Analyse von in seiner Umgebung erfassten Daten bestimmt, ob der Spurwechsel ausführbar ist, und dem Fahrer das Ergebnis dieser Bestimmung signalisiert, und einen zweiten Schritt, bei dem im Falle der Validierung des Spurwechsels durch den Fahrer das Fahrzeug (V) ausgewählte Aktoren ansteuert, die es umfasst, damit dieselben ein Manöver einleiten, das dazu bestimmt ist, den validierten Spurwechsel auszuführen.

2. Verfahren nach Anspruch 1, **dadurch gekennzeichnet, dass** im zweiten Schritt das Fahrzeug (V) den Fahrtrichtungsanzeiger deaktiviert, sobald es auf einer Ziel-Fahrspur angekommen ist.

3. Verfahren nach einem der Ansprüche 1 und 2, **dadurch gekennzeichnet, dass** im zweiten Schritt das Fahrzeug (V) das Spurwechselmanöver im Falle der Validierung des Spurwechsels durch den Fahrer, die auf die Signalisierung einer Unmöglichkeit des Spurwechsels folgt, unterbindet.

4. Verfahren nach einem der Ansprüche 1 bis 3, **dadurch gekennzeichnet, dass** im ersten Schritt das Fahrzeug (V) dem Fahrer das Ergebnis seiner Bestimmung mittels einer Textmeldung und/oder einer akustischen Meldung signalisiert.

5. Verfahren nach einem der Ansprüche 1 bis 4, **dadurch gekennzeichnet, dass** im ersten Schritt die erfassten Daten aus Erfassungsmitteln (MAQ) des Fahrzeugs (V) stammen.

6. Kontrollvorrichtung (DC) zum Ausführen eines automatisierten Spurwechselmanövers eines automatisierten Fahrzeugs (V), **dadurch gekennzeichnet, dass** es Kontrollmittel (MC) umfasst, die dafür eingerichtet sind, im Falle der Wahl, durch einen Fahrer des Fahrzeugs (V), einer Seite, zu der hin er die Spur wechseln will, um eine Aktivierung eines Fahrtrichtungsanzeigers auszulösen, der der gewählten Seite zugeordnet ist, dafür, anschließend eine Signalisierung eines Ergebnisses einer Bestimmung einer Möglichkeit des Ausführens des Spurwechsels durch Analyse von Daten, die in einer Umgebung des Fahrzeugs (V) erfasst wurden, an den Fahrer auszulösen, dafür, anschließend im Falle der Validierung des Spurwechsels durch den Fahrer Befehle an ausgewählte Aktoren des Fahrzeugs (V) bereitzustellen, damit dieselben ein Manöver einleiten, das dazu bestimmt ist, den Spurwechsel auszuführen.

7. Vorrichtung nach Anspruch 6, **dadurch gekennzeichnet, dass** die Kontrollmittel (MC) dafür eingerichtet sind, eine Deaktivierung des Fahrtrichtungsanzeigers auszulösen, sobald das Fahrzeug (V) auf einer Ziel-Fahrspur angekommen ist.

8. Vorrichtung nach einem der Ansprüche 6 und 7, **dadurch gekennzeichnet, dass** die Kontrollmittel (MC) dafür eingerichtet sind, das Spurwechselmanöver im Falle der Validierung des Spurwechsels durch den Fahrer, die auf die Signalisierung einer Unmöglichkeit des Spurwechsels folgt, zu unterbinden.

9. Automatisiertes Fahrzeug (V), **dadurch gekennzeichnet, dass** es eine Kontrollvorrichtung (DC) nach einem der Ansprüche 6 bis 8 umfasst.

10. Fahrzeug nach Anspruch 9, **dadurch gekennzeichnet, dass** es vom Typ Kraftfahrzeug ist.

## Claims

1. Method for controlling the carrying out of an automated lane change manoeuvre of an automated vehicle (V), **characterised in that** it comprises a first step wherein a driver of said vehicle (V) selects a side towards which he wants to change lanes, then said vehicle (V) activates a direction change indicator associated with said selected side, then determines, through the analysis of data acquired in its environment, if said lane change can be carried out, and signals to said driver the result of this determination, and a second step wherein, in case of validation of said lane change by said driver, said vehicle (V) controls chosen actuators that it comprises so that they induce a manoeuvre intended to carry out said validated lane change.

2. Method according to claim 1, **characterised in that** in said second step said vehicle (V) deactivates said direction change indicator once it has reached a destination traffic lane.

3. Method according to one of claims 1 and 2, **characterised in that** in said second step said vehicle (V) prohibits said lane change manoeuvre in case of validation of said lane change by said driver consecutively to the signalling of an impossibility of a lane change.

4. Method according to one of claims 1 to 3, **characterised in that** in said first step said vehicle (V) signals to said driver said result of its determination by means of a text message and/or an audible message.

5. Method according to one of claims 1 to 4, **characterised in that** in said first step said data acquired come from acquisition means (MAQ) of said vehicle (V).

6. Control device (DC) for carrying out an automated lane change manoeuvre of an automated vehicle (V), **characterised in that** it comprises control means (MC) arranged, in case of selection by a driver of said vehicle (V) of a side towards which he wants to change lanes, to trigger an activation of a direction change indicator associated with said selected side, then to trigger a signalling to said driver of a result of a determination of a possibility of carrying out said lane change through analysis of data acquired in an environment of said vehicle (V), then, in case of validation of said lane change by said driver, to supply the commands to chosen actuators of said vehicle (V) so that they induce a manoeuvre intended to carry out said lane change.

7. Device according to claim 6, **characterised in that** said control means (MC) are arranged to trigger a deactivation of said direction change indicator once said vehicle (V) has reached a destination traffic lane.

8. Device according to one of claims 6 and 7, **characterised in that** said control means (MC) are arranged to prohibit said lane change manoeuvre in case of validation of said lane change by said driver consecutively to the signalling of an impossibility of a lane change.

9. Automated vehicle (V), **characterised in that** it comprises a control device (DC) according to one of claims 6 to 8.

10. Vehicle according to claim 9, **characterised in that** it is of the automobile type.
